# EUROPÄISCHE PATENTSCHRIFT

(11) **EP 2 989 282 B1**
(45) Veröffentlichungstag und Bekanntmachung des Hinweises auf die Patenterteilung: **15.03.2017**
(21) Anmeldenummer: 14715292.0
(22) Anmeldetag: 04.04.2014
(51) Int. Cl.: E21B 17/02, E21B 17/042

(54) **METALLROHR MIT VERBINDER**
METAL PIPE HAVING A CONNECTOR
TUBE MÉTALLIQUE À RACCORD

(30) Priorität: 22.04.2013 DE 102013207206; 23.04.2013 US 201361815016 P; 08.05.2013 DE 102013208458; 10.05.2013 US 201361821938 P
(43) Veröffentlichungstag der Anmeldung: 02.03.2016
(73) Patentinhaber: Voith Patent GmbH, 89522 Heidenheim (DE)
(72) Erfinder: LANG, Markus, 85467 Neuching (DE); TICHELMANN, Patrick, 51643 Gummersbach (DE)
(86) Internationale Anmeldenummer: PCT/EP2014/056766
(87) Internationale Veröffentlichungsnummer: WO 2014/173652

(56) Entgegenhaltungen:
- DE-U1- 29 914 915
- GB-A- 2 230 832
- US-A- 4 813 715
- US-A- 5 332 049

## Beschreibung

Die Erfindung betrifft ein Rohrelement, welches ein Metallrohr und zumindest einen Metallverbinder aufweist, der an einem Ende des Metallrohres derart befestigt ist, dass Drehmomente und Axialkräfte zwischen Metallrohr und Metallverbinder übertragen werden können, wobei der Metallverbinder ein, insbesondere konisches, Gewinde oder einen Flansch aufweist, über das oder den der Metallverbinder mit einem anderen Metallverbinder eines weiteren Rohrelementes verschraubt werden kann, um zwei Rohrelemente zu verbinden. Solche Rohrelemente werden beispielsweise verwendet, um daraus längere Bohrgestänge, wie sie bei der Erdölbohrung benötigt werden, zusammenzusetzen. Weiterhin betrifft die Erfindung ein Verfahren zur Herstellung solcher Rohrelemente. Im Stand der Technik wird das Metallrohr mit dem Metallverbinder durch Reibschweißen verbunden, wie es beispielsweise in WO 98/13574 A1 gezeigt ist. Ein Nachteil dieser Verbindungsart ist, dass durch das Schweißen im Bereich der Verbindung eine Gefügeveränderung im Metallrohr und im Metallverbinder verursacht wird, die die Festigkeitseigenschaften der verwendeten hochlegierten Stähle negativ beeinflusst. Deshalb ist eine spezielle Wärmebehandlung nach dem Schweißen notwendig, was die Herstellung aufwändig und teuer macht.

Aus der US 4,813,715 ist ein faserverstärktes Rohr mit einem Metallverbinder bekannt, bei dem das Rohr in seinem Endbereich in axialer Richtung zwischen dem das Rohr außen umschließenden Metallverbinder und einem das Rohr außen umschließenden Sicherungsring in axialer Richtung eingespannt wird, indem der Metallverbinder und der Sicherungsring in axialer Richtung miteinander verschraubt werden.

Die Aufgabe der Erfindung ist es, ein solches Rohrelement mit einer einfacher zu montierenden und zuverlässigeren Verbindung zwischen Metallrohr und Metallverbinder zu entwickeln.

Die Aufgabe wird für das Rohrelement erfindungsgemäß dadurch gelöst, dass der Metallverbinder mit einer Innenhülse über ein zylindrisches Gewinde derart verschraubt ist, dass das Metallrohr in einem Verbindungsbereich, der konisch zum Rohrende hin zulaufend ausgeführt ist, zwischen Metallverbinder auf der Außenseite und der Innenhülse auf der Innenseite flächig geklemmt ist. Durch diese kraftschlüssige Befestigung des Metallverbinders am Metallrohr ist keine
zusätzliche Nachbehandlung mehr nötig. Über die Steigung und die Länge des konischen Verbindungsbereiches kann die Klemmkraft festgelegt und an die jeweiligen Anforderungen angepasst werden. Unter konisch zum Rohrende hin zulaufend ist zu verstehen, dass der Durchmesser im Verbindungsbereich nach außen zum zylindrischen Gewinde hin abnimmt. Es können dadurch Verbindungen hergestellt werden, über die ein großes Drehmoment und hohe Axialkräfte übertragen werden können. Somit sind auch Rohrelemente für Bohrgestänge, wie sie bei der Erdölbohrung verwendet werden, möglich. Bei Rohrelementen für Bohrgestänge können bevorzugt Metallverbinder mit konischem Gewinde zum Verbinden zweier Rohrelemente, insbesondere mit den in der Erdölindustrie üblichen API-Gewinden, vorgesehen werden. Ein weiterer Vorteil der Erfindung ist, dass die Verbindung zwischen Metallverbinder und Metallrohr aufgrund der Verschraubung wieder lösbar ausgeführt werden kann, so dass der Metallverbinder beispielsweise ausgewechselt oder repariert werden kann, wenn das konische Gewinde verschlissen ist, ohne dass das ganze Rohrelement ausgetauscht oder transportiert werden muss. Das ist ein großer Vorteil angesichts der Länge von bis zu 15 m bei solchen Rohrelementen.

Genauso können die erfindungsgemäßen Rohrelemente für andere Arten von Rohren oder Rohrsträngen oder für rohrförmige Antriebswellen eingesetzt werden. Beispielsweise für Rohrverbindungen beim Offshore-Ölfördern (für sogenannte Riser) oder als Auskleidungen von Bohrlöchern (sogenannten Casing oder Liner). Im Falle von rohrförmigen Antriebswellen ist der Metallverbinder bevorzugt mit einem Flansch zur Verbindung mit einem weiteren Rohrelement ausgerüstet.

Als Material für Metallverbinder und Metallrohr kommt bevorzugt Stahl in Betracht. Es ist für das erfindungsgemäße Rohrelement auch möglich, dass das Metallrohr und/oder der Metallverbinder aus Aluminiumlegierungen, Titan, Titanlegierungen, Grauguß oder Stahlguß hergestellt sind.

Weitere vorteilhafte Merkmale der erfindungsgemäßen Ausführung, die die Zuverlässigkeit und die Montierbarkeit der Verbindung sowie die Verwendbarkeit des Rohrelementes verbessern, finden sich in den Unteransprüchen.

Zusätzlich zu dem einen ersten Metallverbinder kann ein zweiter Metallverbinder am gegenüberliegenden Rohrende vorhanden sein, welcher ebenso wie in Anspruch 1 beschrieben mit dem Metallrohr verbunden ist, insbesondere genauso verbunden ist wie der erste Metallverbinder. Aus solchen Rohrelementen mit zwei Metallverbindern lassen sich längere Bohrstränge oder andere Rohrleitungen zusammensetzen. Bevorzugt weist ein Metallverbinder ein konisches Innengewinde und der zweite Metallverbinder ein konisches Außengewinde auf. So ergeben sich lauter baugleiche Rohrelemente, was die Verwendung erleichtert. Alternativ kann auch je ein Rohrelement mit zwei Metallverbindern mit konischem Innengewinde und ein Rohrelement mit zwei Metallverbindern mit konischem Außengewinde ausgeführt werden, die dann immer abwechselnd zusammengesetzt werden können.

Um eine besonders feste Verbindung zu erreichen, ist es von Vorteil, den Metallverbinder so zu gestalten, dass er auf der Innenseite einen konischen Verbindungsbereich aufweist, der mit der Außenseite des Verbindungsbereiches des Metallrohres in Kontakt ist, und einen Steigungswinkel des Konus zwischen 0,1° und 30°, bevorzugt zwischen 0,5° und 5° bezogen auf die Achse des Rohres aufweist. Durch diesen Steigungswinkel ergibt sich ein ausreichend langer Verbindungsbereich, um eine gute Pressung im Klemmbereich zu gewährleisten.

Weiterhin kann es vorteilhaft sein, dass die Innenhülse auf der Außenseite einen konischen Verbindungsbereich aufweist, der mit dem Verbindungsbereich des Metallrohres in Kontakt ist, und einen Steigungswinkel des Konus zwischen 0,1° und 30°, bevorzugt zwischen 0,5° und 5° bezogen auf die Achse des Rohres aufweist.

Um eine gute Verbindung mit dem Metallrohr zu ermöglichen, sollte die Rauhigkeit auf der Außenseite des Verbindungsbereiches (3.1) der Innenhülse und/oder auf der Innenseite des Verbindungsbereiches (1.1) des Metallrohres ausreichend hoch sein.

Eine besonders zuverlässige Verbindung und eine vereinfachte Fertigungsmöglichkeit ergeben sich, wenn die Wandstärke des Metallrohres im Verbindungsbereich entlang der axialen Richtung im Wesentlichen konstant bleibt. D.h. dass der Steigungswinkel des konischen Bereiches auf der Innenhülse und an dem Metallverbinder im Verbindungsbereich gleich ist, was zu eine besonders guten Klemmung führt. Bevorzugt ist die Wandstärke des Metallrohres im Verbindungsbereich zwischen 3 mm und 20 mm beträgt, besonders bevorzugt zwischen 5 mm und 12 mm, um der Belastung standhalten zu können.

Die Festigkeit gegenüber Innendruck, sowie die Verschleißfestigkeit kann wesentlich erhöht werden, wenn das Metallrohr, insbesondere im gesamten Bereich, der nicht vom Metallverbinder oder einem weiteren Metallverbinder abgedeckt ist, mit einer Schicht aus faserverstärktem Kunststoff umgeben ist. Als faserverstärkter Kunststoff kommt insbesondere CFK (Kohlefaser-verstärkter Kunststoff) in Frage. Die Schicht kann beispielsweise durch Umwickeln des Metallrohres mit einer oder mehrerer Lagen und anschließendem Aushärten hergestellt werden. Um einen ausreichenden Effekt zu erzielen, sollte die Dicke der Schicht bevorzugt zwischen 2 mm und 8 mm betragen.

In vielen Anwendungen ist es gewünscht, dass Daten oder Energie oder beides über die Rohrelemente zu übertragen werden können. Dazu kann ein Kabel vorhanden sein, das sich von einem Rohrende zum anderen Rohrende erstreckt und das mit einem Stecker verbunden ist, der sich innerhalb des Metallverbinders befindet und der geeignet ist, eine elektrische Verbindung zu einem anderen Stecker oder Kabel in einem weiteren Rohrelement herzustellen, wenn das Rohrelement mit dem weiteren Rohrelement über das Gewinde oder den Flansch verschraubt ist. Es können auch mehrere Kabel und/oder mehrere Stecker an einem Rohrelement vorhanden sein. Wenn das Metallrohr mit einer Schicht aus faserverstärktem Kunststoff umgeben ist, können sich das oder die Kabel zwischen Metallrohr und dieser Kunststoffschicht befinden, so dass sie vor Beschädigung geschützt sind. Der Stecker kann insbesondere ringförmig gestaltet sein. Unter Stecker wird hier allgemein ein Bauteil verstanden, das geeignet ist eine elektrische Verbindung herzustellen, mit der Daten oder Energie übertragen werden kann. Die elektrische Verbindung zwischen den Rohrelementen kann durch physischen Kontakt des Steckers mit einem Gegenkontakt hergestellt werden oder durch elektromagnetische Kopplung des Steckers an ein Gegenstück also drahtlos erfolgen. Dabei können auch mehrere Kabel und/oder mehrere Stecker an einem Rohrelement vorhanden sein.

Der Stecker ist besonders gut gegenüber den Einflüssen aus dem Innenraum des Rohres, in dem Öl oder ein anderes Medium fließen kann, geschützt, wenn die Innenhülse einen sich an das zylindrische Gewinde anschließenden Schutzschild aufweist, welches derart ausgebildet ist, dass der Stecker in radialer Richtung gesehen, vollständig zwischen Metallverbinder und Innenhülse liegt. Die Innenhülse ist bevorzugt so gestaltet, dass sie nach dem Zusammenschrauben mit einem weiteren Rohrelement, den Stecker gegenüber dem Innenraum abdichtet.

Damit das Kabel sicher vor Beschädigung beim Aufschrauben des Metallverbinders vom Metallrohr zum Stecker geführt werden kann, hat die Innenhülse bevorzugt eine axiale Nut im zylindrischen Gewinde oder eine axiale Längsbohrung im Material unter dem zylindrischen Gewinde, durch welche das Kabel vom Metallrohr zum Stecker geführt ist. Die Nut ist leichter zu fertigen. Die Längsbohrung hat den Vorteil, dass das Gewinde dadurch nicht unterbrochen und nicht geschwächt wird. Wenn mehrere Kabel vorhanden sind, können auch mehrere am Umfang verteilt angeordnete Nuten oder Längsbohrungen vorgesehen sein.

Um das Kabel auch durch den Verbindungsbereich ohne Beschädigung führen zu können ist es von Vorteil, wenn das Metallrohr im Verbindungsbereich eine axiale Nut aufweist, die in Verlängerung der axialen Nut im zylindrischen Gewinde oder der axialen Längsbohrung unter dem zylindrischen Gewinde an der Innenhülse angeordnet ist.

Da in manchen Anwendungen das Rohrelement von einem flüssigen Medium durchströmt wird, wie zum Beispiel Öl oder Bohrflüssigkeit, ist es wichtig, den Druckverlust gering zu halten. Dazu ist es vorteilhaft, wenn die Innenfläche der Gegenhülse ein in axialer Richtung komplett stetig verlaufendes Innenprofil ohne Kanten oder Stufensprünge aufweist. Dieser kontinuierliche düsenähnliche Verlauf führt zu einem strömungsoptimierten Rohrelement mit geringem Druckverlust im Bereich der Verbindungsstellen der verschiedenen Rohrelemente. Bisher bekannte Rohrelemente haben den Nachteil, dass sie im Bereich der Verbindungen größere Druckverluste verursachen. Durch die erfindungsgemäße Art der Verbindung zwischen Metallverbinder und Rohr ist es möglich, durch die Gegenhülse ein strömungsoptimiertes Innenprofil zu erzeugen.

Für das erfindungsgemäße Verfahren zur Herstellung eines oben beschriebenen Rohrelementes wird die Aufgabe dadurch gelöst, dass die folgenden Schritte ausgeführt werden:
a) die Innenhülse wird in ein zunächst noch zylindrisches Rohrende des Metallrohres montiert, so dass sich ein konisch ausgeführter Verbindungsbereich der Innenhülse im Metallrohr befindet;
b) das Metallrohr wird an diesem Rohrende so verformt, bevorzugt gewalzt, dass ein konisch zum Rohrende hin zulaufender Verbindungsbereich entsteht, der im Kontakt mit dem konischen Verbindungsbereich der Innenhülse ist;
c) der Metallverbinder wird über das zylindrische Gewinde auf die Innenhülse geschraubt, so dass das Metallrohr zwischen Innenhülse und Metallverbinder flächig im Verbindungsbereich eingeklemmt wird.

So lässt sich ein Rohrelement mit einer zuverlässigen Verbindung, die auch höhere Drehmomente und Axialkräfte übertragen kann herstellen, ohne dass aufwändige Nachbehandlungen nötig sind. Aufgrund des Kraftschlusses, der über das zylindrische Gewinde in Verbindung mit dem konischen Verbindungsbereich erzeugt wird, ist es möglich, eine Verbindung herzustellen, die auch wieder gelöst werden kann, was die oben genannten Vorteile bietet.

Es kann auch ein Rohrelement mit Kabelverbindung hergestellt werden, indem ein Kabel von einem Rohende bis zum anderen Rohrende auf der Außenseite des Metallrohres aufgebracht wird, dass das Kabel in eine axiale Nut im zylindrischen Gewinde oder durch eine axiale Längsbohrung im Material unter dem zylindrischen Gewinde der Innenhülse, sowie in eine sich daran anschließende Nut im Verbindungsbereich des Metallrohres gelegt wird und dass das Kabel an einen Stecker angeschlossen wird, bevor Schritt c) durchgeführt wird. In gleicher Weise können auch mehrere Kabel und/oder mehrere Stecker angebracht werden. Durch die Nut oder die Längsbohrung sind die Kabel vor Beschädigung beim Aufschrauben des Metallverbinders auf die Innenhülse geschützt.

Weiterhin kann das Metallrohr mit einer Schicht aus faserverstärktem Kunststoff umwickelt werden, bevorzugt im gesamten Bereich der nicht vom Metallverbinder oder einem weiteren Metallverbinder abgedeckt ist. Nach dem Umwickeln kann das Rohr zum Aushärten der Kunststoffschicht einer einfachen Wärmebehandlung unterzogen werden, zum Beispiel in einem Ofen. Bevorzugt wird für diese Schicht CFK (Kohlefaser-verstärkter Kunststoff) eingesetzt. Im Falle eines Rohrelementes mit Kabelverbindung kann das Kabel vor dem Umwickeln auf das Metallrohr aufgebracht werden, so dass es später von der Schicht geschützt ist. Der Stecker kann nach der Aushärtung montiert werden.

Anhand von Ausführungsbeispielen werden weitere vorteilhafte Merkmale der Erfindung erläutert unter Bezugnahme auf die Zeichnungen. Die genannten Merkmale können nicht nur in der dargestellten Kombination vorteilhaft umgesetzt werden, sondern auch einzeln untereinander kombiniert werden.
- **Fig.1**: Gestängerohr nach dem Stand der Technik
- **Fig.2**: Erfindungsgemäßes Rohrelement mit Kabel in Explosionsdarstellung
- **Fig.3**: Erfindungsgemäßes Rohrelement mit Kabel
- **Fig.4**: Detaildarstellung der Innenhülse

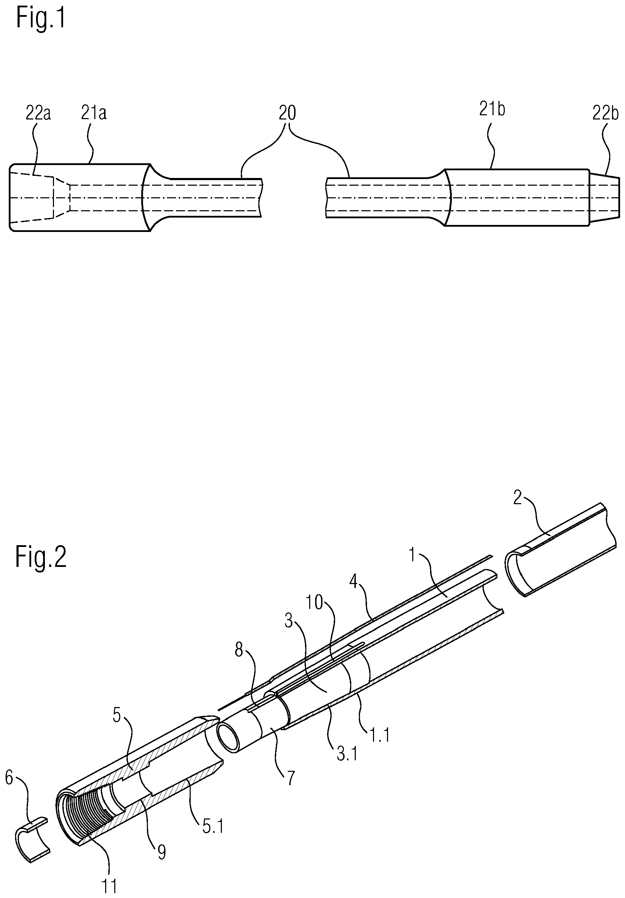

Nachfolgend werden die Figuren detaillierter beschrieben. In **Fig.1** ist ein Bohrgestängeelement nach dem Stand der Technik dargestellt. Das Metallrohr 20 ist an jedem Rohrende mit einem Metallverbinder 21 a,21 b über Reibverschweißung verbunden. Der eine Metallverbinder 21 a weist ein konisches Innengewinde 22a auf, der andere Metallverbinder 21 b ein konisches Außengewinde. Dadurch lassen sich längere Bohrgestänge zusammensetzen. Ist eines der konischen Gewinde 22a oder 22b verschlissen, muss das ganze Bohrgestängeelement ausgetauscht oder zum Überarbeiten abtransportiert werden, da die Metallverbinder untrennbar mit dem Metallrohr 20 verbunden sind.

**Fig.2** zeigt ein Beispiel für ein erfindungsgemäßes Rohrelement. Das Metallrohr 1 ist im Verbindungsbereich 1.1 konisch zum Rohrende hin zulaufend ausgeführt und hat eine axiale Nut 10 in diesem Bereich. Im Inneren des Rohrendes ist eine Innenhülse 3 montiert, die mit ihrem konischen Verbindungsbereich 3.1 an der Innenwand des Metallrohres 1 anliegt. Die Innenhülse 3 besitzt ein zylindrisches Gewinde 7, welches von einer axialen Nut 8 unterbrochen ist. Die Nut 8 auf der Innenhülse und die Nut 10 auf dem Verbindungsbereich des Metallrohres liegen in Flucht zueinander, so dass das Kabel 4 eingelegt werden kann. Das Metallrohr wird mit einer Schicht 2 aus faserverstärktem Kunststoff, bevorzugt aus CFK, überwickelt. Der Stecker 6 wird mit dem Kabel 4 verbunden, und der Metallverbinder 5 wird über das zylindrische Gewinde 9,7 auf die Innenhülse 3 aufgeschraubt. Dadurch wird das Metallrohr 1 im Verbindungsbereich 1.1 zwischen dem Verbindungsbereich 3.1 der Innenhülse und dem Verbindungsbereich 5.1 des Metallverbinders eingeklemmt. Eine Verbindung entsteht, die Drehmomente und Axialkräfte übertragen kann. Der Metallverbinder 5 hat an seinem freien Ende ein konisches Innengewinde 11 mit dem das Rohrelement mit einem weiteren Rohrelement verschraubt werden kann.

Alternativ kann der Metallverbinder auch ein konisches Außengewinde auf einem Zapfen aufweisen oder ein anders Gewinde. Der Metallverbinder kann auch einen Flansch aufweisen, über den er mit einem anderen Metallverbinder verschraubt werden kann.

Auf der rechten Seite ist die Darstellung abgeschnitten. Das andere Ende des Rohrelementes kann einen zweiten Metallverbinder aufweisen, der in gleichartiger Weise mit dem Metallrohr 1 verbunden ist. Der zweite Metallverbinder hat in der dargestellten Ausführung bevorzugt ein zum ersten Metallverbinder 5 passendes konisches Außengewinde.

Das dargestellte Rohrelement eignet sich besonders für Bohrgestänge, wie sie in der Erdölindustrie verwendet werden. Bei solchen Bohrgestängen liegt der Gewindedurchmesser des zylindrischen Gewindes 7,9 meist zwischen 80 und 180 mm. Eine besonders bevorzugte Ausführungsform für ein Bohrgestänge in diesem Durchmesserbereich weist ein zylindrisches Gewinde mit einer Länge zwischen 50 und 150 mm auf. Unabhängig von der genannten Gewindelänge beträgt bei solchen Rohrelementen die axiale Länge des Verbindungsbereiches bevorzugt zwischen 150 und 250 mm.

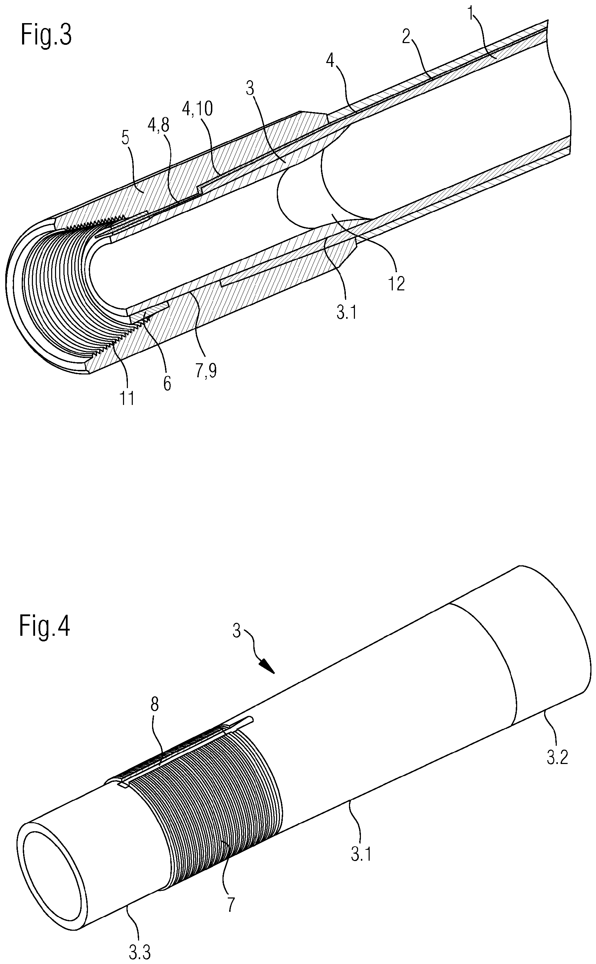

In **Fig.3** ist das eine Ende des zusammenmontierten Rohrelementes in vergrößerter Darstellung gezeigt. Das Metallrohr 1 ist im Verbindungsbereich 1.1 zwischen Metallverbinder 5 auf der Außenseite und Innenhülse 3 auf der Innenseite eingeklemmt. Der Verbindungsbereich ist ausreichend groß dimensioniert, so dass höhere Drehmomente und Axialkräfte übertragen werden können. Das Kabel 4 verläuft geschützt unter der Schicht 2 aus faserverstärktem Kunststoff. Im Verbindungsbereich befindet es sich in der Nut 10 und im Bereich des zylindrischen Gewindes 7,9 in der Nut 8. Am Ende ist es an den Stecker 6 angeschlossen. Der Stecker liegt vollständig zwischen Innenhülse 3 und Metallverbinder 5 und ist so ausgeführt, dass beim Verschrauben zweier Rohrelemente eine elektrische Verbindung zur Daten- und/oder Energieübertragung herstellt wird.

In **Fig. 4** ist die Innenhülse 3 alleine zu sehen. Gut zu erkennen ist die Nut 8 im zylindrischen Gewinde 7. Der konische Verbindungsbereich 3.1 geht in diesem Fall über in eine zylindrischen Bereich 3.2 am dickeren Ende der Innenhülse 3. Am dünneren Ende ist das Schutzschild 3.3 vorhanden, hier als zylindrischer Bereich ausgeführt, auf dem der Stecker 6 montiert wird.

### Bezugszeichenliste

- 1: Metallrohr
- 2: Composite-Umwicklung
- 3: Innenhülse
- 3.1: konischer Verbindungsbereich
- 3.2: zylindrischer Bereich am dicken Ende
- 3.3: Schutzschild am dünnen Ende
- 4: Kabel
- 5: Metallverbinder
- 5.1: konischer Verbindungsbereich
- 6: Stecker
- 7: zylindrisches Gewinde auf Innenhülse
- 8: Nut im Gewinde
- 9: zylindrisches Gewinde im Metallverbinder
- 10: Nut im Metallrohr
- 11: konisches Gewinde
- 12: Innenprofil der Innenhülse
- 20: Metallrohr
- 21a: erster Metallverbinder
- 21b: zweiter Metallverbinder
- 22a: konisches Innengewinde
- 22b: konisches Außengewinde

## Patentansprüche

1. Rohrelement, welches ein Metallrohr (1) und zumindest einen Metallverbinder (5) aufweist, der an einem Ende des Metallrohres (1) derart befestigt ist, dass Drehmomente und Axialkräfte zwischen Metallrohr (1) und Metallverbinder (5) übertragen werden können, wobei der Metallverbinder (5) ein ,insbesondere konisches, Gewinde (11) oder einen Flansch aufweist, über das oder den der Metallverbinder (5) mit einem anderen Metallverbinder eines weiteren Rohrelementes verschraubt werden kann, um zwei Rohrelemente zu verbinden,
**dadurch gekennzeichnet,**
**dass** der Metallverbinder (5) mit einer Innenhülse (3) über ein zylindrisches Gewinde (7,9) derart verschraubt ist, dass das Metallrohr (1) in einem Verbindungsbereich (1.1), der konisch zum Rohrende hin zulaufend ausgeführt ist, zwischen Metallverbinder (5) auf der Außenseite und der Innenhülse (3) auf der Innenseite flächig geklemmt ist.

2. Rohrelement nach Anspruch 1
**dadurch gekennzeichnet,**
**dass** ein zweiter Metallverbinder am gegenüberliegenden Rohrende vorhanden ist, welcher ebenso wie in Anspruch 1 beschrieben mit dem Metallrohr (1) verbunden ist, insbesondere genauso verbunden ist wie der eine Metallverbinder (5).

3. Rohrelement nach einem der vorherigen Ansprüche
**dadurch gekennzeichnet,**
**dass** der Metallverbinder (5) auf der Innenseite einen konischen Verbindungsbereich (5.1) aufweist, der mit dem Verbindungsbereich (1.1) des Metallrohres in Kontakt ist, und einen Steigungswinkel des Konus zwischen 0,1° und 30°, bevorzugt zwischen 0,5° und 5° bezogen auf die Achse des Rohres aufweist.

4. Rohrelement nach einem der vorherigen Ansprüche
**dadurch gekennzeichnet,**
**dass** die Innenhülse (3) auf der Außenseite einen konischen Verbindungsbereich (3.1) aufweist, der mit dem Verbindungsbereich (1.1) des Metallrohres in Kontakt ist, und einen Steigungswinkel des Konus zwischen 0,1° und 30°, bevorzugt zwischen 0,5° und 5° bezogen auf die Achse des Rohres aufweist.

5. Rohrelement nach einem der vorherigen Ansprüche
**dadurch gekennzeichnet,**
**dass** die Wandstärke des Metallrohres (1) im Verbindungsbereich (1.1) entlang der axialen Richtung im Wesentlichen konstant bleibt und bevorzugt zwischen 3 mm und 20 mm beträgt, besonders bevorzugt zwischen 5 mm und 12 mm.

6. Rohrelement nach einem der vorherigen Ansprüche
**dadurch gekennzeichnet,**
**dass** das Metallrohr (1), insbesondere im gesamten Bereich, der nicht vom Metallverbinder (5) oder einem weiteren Metallverbinder abgedeckt ist, mit einer Schicht aus faserverstärktem Kunststoff umgeben ist, wobei die Dicke der Schicht bevorzugt zwischen 2 mm und 8 mm beträgt.

7. Rohrelement nach einem der vorherigen Ansprüche
**dadurch gekennzeichnet,**
**dass** ein Kabel (4) vorhanden ist, das sich von einem Rohrende zum anderen Rohrende erstreckt und das mit einem Stecker (6) verbunden ist, der sich innerhalb des Metallverbinders (5) befindet und der geeignet ist, eine elektrische Verbindung zu einem anderen Stecker oder Kabel in einem weiteren Rohrelement herzustellen, wenn das Rohrelement mit dem weiteren Rohrelement über das Gewinde (11) oder den Flansch verschraubt ist.

8. Rohrelement nach Anspruch 7
**dadurch gekennzeichnet,**
**dass** die Innenhülse (3) einen sich an das zylindrische Gewinde (7) anschließenden Schutzschild (3.3) aufweist, welches derart ausgebildet ist, dass der Stecker (6) in radialer Richtung gesehen, vollständig zwischen Metallverbinder (5) und Innenhülse (3) liegt.

9. Rohrelement nach einem der Ansprüche 7 oder 8
**dadurch gekennzeichnet,**
**dass** die Innenhülse (3) eine axiale Nut (8) im zylindrischen Gewinde (7) oder eine axiale Längsbohrung im Material unter dem zylindrischen Gewinde (7) aufweist, durch welche das Kabel (4) vom Metallrohr (1) zum Stecker (6) geführt ist.

10. Rohrelement nach einem der Ansprüche 7 bis 9
**dadurch gekennzeichnet,**
**dass** das Metallrohr (1) im Verbindungsbereich (1.1) eine axiale Nut aufweist, die in Verlängerung der axialen Nut (8) im zylindrischen Gewinde oder der axialen Längsbohrung unter dem zylindrischen Gewinde an der Innenhülse (3) angeordnet ist.

11. Rohrelement nach einem der Ansprüche 7 bis 10
**dadurch gekennzeichnet,**
**dass** die Innenfläche der Innenhülse (3) ein in axialer Richtung komplett stetig verlaufendes Innenprofil (12) ohne Kanten oder Stufensprünge aufweist.

12. Verfahren zur Herstellung eines Rohrelementes, welches gemäß einem der vorherigen Ansprüche gestaltet ist,
**dadurch gekennzeichnet,**
**dass** die folgenden Schritte ausgeführt werden:
a) die Innenhülse (3) wird in ein zunächst noch zylindrisches Rohrende des Metallrohres (1) montiert, so dass sich ein konisch ausgeführter Verbindungsbereich (3.1) der Innenhülse im Metallrohr (1) befindet;
b) das Metallrohr (1) wird an diesem Rohrende so verformt, bevorzugt gewalzt, dass ein konisch zum Rohrende hin zulaufender Verbindungsbereich (1.1) entsteht, der im Kontakt mit dem konischen Verbindungsbereich (3.1) der Innenhülse ist;
c) der Metallverbinder (5) wird über das zylindrische Gewinde (7,9) auf die Innenhülse (3) geschraubt, so dass das Metallrohr (1) zwischen Innenhülse (3) und Metallverbinder (5) flächig im Verbindungsbereich (1.1) eingeklemmt wird.

13. Verfahren nach Anspruch 12
**dadurch gekennzeichnet,**
**dass** ein Kabel (4) von einem Rohrende bis zum anderen Rohende auf der Außenseite des Metallrohres (1) aufgebracht wird, dass das Kabel (4) in eine axiale Nut (10) im zylindrischen Gewinde (7) oder durch eine axiale Längsbohrung im Material unter dem zylindrischen Gewinde (7) der Innenhülse (3), sowie in eine sich daran anschließende Nut (10) im Verbindungsbereich (1.1) des Metallrohres gelegt wird und dass das Kabel (4) an einen Stecker (6) angeschlossen wird, bevor Schritt c) durchgeführt wird.

14. Verfahren nach Anspruch 12 oder 13
**dadurch gekennzeichnet,**
**dass** das Metallrohr (1) mit einer Schicht aus faserverstärktem Kunststoff (2) umwickelt wird, bevorzugt im gesamten Bereich der nicht vom Metallverbinder (5) oder einem weiteren Metallverbinder abgedeckt ist.

## Claims

1. Pipe element which has a metal pipe (1) and at least one metal connector (5) which is fastened at one end of the metal pipe (1) in such a way that torques and axial forces can be transmitted between the metal pipe (1) and metal connector (5) wherein the metal connector (5) has an in particular conical thread (11) or a flange by means of which thread or flange the metal connector (5) can be screwed to another metal connector of an additional pipe element in order to connect two pipe elements, **characterized in that** the metal connector (5) is screwed to an inner sleeve (3) by means of a cylindrical thread (7, 9) in such a way that the metal pipe (1) is clamped in planar manner between a metal connector (5) on the outside and the inner sleeve (3) on the inside in a connection region (1.1) which is designed to taper conically towards the pipe end.

2. Pipe element according to Claim 1 **characterized in that** a second metal connector is provided on the opposite pipe end which is connected to the metal pipe (1) just as described in claim 1, more particularly is connected exactly like the one metal connector (5).

3. Pipe element according to one of the preceding claims **characterized in that** the metal connector (5) has on the inside a conical connection region (5.1) which is in contact with the connection region (1.1) of the metal pipe, and has a pitch angle of the cone between 0.1° and 30°, preferably between 0.5° and 5° in relation to the axis of the pipe.

4. Pipe element according to one of the preceding claims **characterized in that** the inner sleeve (3) has on the outside a conical connection region (3.1) which is in contact with the connection region (1.1) of the metal pipe, and a pitch angle of the cone between 0.1° and 30°, preferably between 0.5° and 5° in relation to the axis of the pipe.

5. Pipe element according to one of the preceding claims **characterized in that** the wall thickness of the metal pipe (1) remains substantially constant in the connection region (1.1) along the axial direction and preferably amounts to between 3 mm and 20 mm, more particularly preferred between 5 mm and 12 mm.

6. Pipe element according to one of the preceding claims **characterized in that** the metal pipe (1), is enclosed in a coating of fibre-reinforced plastics, more particularly in the entire region which is not covered by the metal connector (5) or an additional metal connector, wherein the thickness of the coating is preferably between 2 mm and 8 mm.

7. Pipe element according to one of the preceding claims **characterized in that** a cable (4) is provided which extends from one end of the pipe to the other end of the pipe and which is connected to a plug (6) which is located inside the metal connector (5) and which is suitable for producing an electrical connection to another plug or cable in another pipe element, when the pipe element is screwed to the additional pipe element by way of the thread (11) or the flange.

8. Pipe element according to Claim 7 **characterized in that** the inner sleeve (3) has a protective shield (3.3) which adjoins the cylindrical thread (7) and which is designed in such a way that the plug (6) seen in the radial direction lies completely between the metal connector (5) and the inner sleeve (3).

9. Pipe element according to one of Claims 7 or 8 **characterized in that** the inner sleeve (3) has an axial groove (8) in the cylindrical thread (7) or an axial longitudinal bore in the material underneath the cylindrical thread (7) through which the cable (4) is guided from the metal pipe (1) to the plug (6).

10. Pipe element according to one of Claims 7 to 9 **characterized in that** the metal pipe (1) has in the connection region (1.1) an axial groove which is arranged on the inner sleeve (3) in an extension of the axial groove (8) in the cylindrical thread or the axial longitudinal bore underneath the cylindrical thread.

11. Pipe element according to one of Claims 7 to 10 **characterized in that** the inner face of the inner sleeve (3) has an inner profile (12) running completely continuously in the axial direction without edges or steps.

12. Method for manufacturing a pipe element which is configured according to one of the preceding claims **characterized in that** the follow steps are implemented:
a) the inner sleeve (3) is mounted in an initially still cylindrical pipe end of the metal pipe (1) so that a conically designed connection region (3.1) of the inner sleeve is located in the metal pipe (1);
b) the metal pipe (1) is deformed at this pipe end, preferably rolled, so that a connection region (1.1) is produced which tapers conically towards the pipe end and which is in contact with the conical connection region (3.1) of the inner sleeve;
c) the metal connector (5) is screwed by way of the cylindrical thread (7,9) onto the inner sleeve (3) so that the metal pipe (1) is clamped in planar manner in the connection region (1.1) between the inner sleeve (3) and metal connector (5).

13. Method according to Claim 12 **characterized in that** a cable (4) is brought from one pipe end to the other pipe end on the outside of the metal pipe (1), that the cable (4) is laid in an axial groove (10) in the cylindrical thread (7) or through an axial longitudinal bore in the material underneath the cylindrical thread (7) of the inner sleeve (3), as well as in an adjoining groove (10) in the connection region (1.1) of the metal pipe, and that the cable (4) is attached to a plug (6) before step c) is carried out.

14. Method according to Claim 12 or 13 **characterized in that** the metal pipe (1) is wrapped with a coating of a fibre-reinforced plastic (2), preferably in the entire region which is not covered by the metal connector (5) or a further metal connector.

## Revendications

1. Elément tubulaire, qui présente un tube métallique (1) et au moins un raccord métallique (5), qui est fixé à une extrémité du tube métallique (1) de telle manière que des couples de torsion et des forces axiales puissent être transmis entre le tube métallique (1) et le raccord métallique (5), dans lequel le raccord métallique (5) présente un filet (11), en particulier conique, ou une bride, par lequel ou laquelle le raccord métallique (5) peut être vissé à un autre raccord métallique d'un autre élément tubulaire, afin de raccorder deux éléments tubulaires, **caractérisé en ce que** le raccord métallique (5) est vissé à une douille intérieure (3) au moyen d'un filet cylindrique (7, 9), de telle manière que le tube métallique (1) soit serré à plat dans une région de raccordement (1.1), qui est de forme conique en direction de l'extrémité du tube, entre le raccord métallique (5) sur le côté extérieur et la douille intérieure (3) sur le côté intérieur.

2. Elément tubulaire selon la revendication 1, **caractérisé en ce qu'**il se trouve sur l'extrémité opposée du tube un deuxième raccord métallique, qui est également raccordé au tube métallique (1) comme cela est décrit dans la revendication 1, en particulier raccordé exactement comme le premier raccord métallique (5).

3. Elément tubulaire selon l'une quelconque des revendications précédentes, **caractérisé en ce que** le raccord métallique (5) présente sur le côté intérieur une région de raccordement conique (5.1), qui est en contact avec la région de raccordement (1.1) du tube métallique, et présente un angle d'inclinaison du cône compris entre 0,1° et 30°, de préférence entre 0,5° et 5° par rapport à l'axe du tube.

4. Elément tubulaire selon l'une quelconque des revendications précédentes, **caractérisé en ce que** la douille intérieure (3) présente sur le côté extérieur une région de raccordement conique (3.1), qui est en contact avec la région de raccordement (1.1) du tube métallique, et présente un angle d'inclinaison du cône compris entre 0,1° et 30°, de préférence entre 0,5° et 5°, par rapport à l'axe du tube.

5. Elément tubulaire selon l'une quelconque des revendications précédentes, **caractérisé en ce que** l'épaisseur de paroi du tube métallique (1) reste essentiellement constante le long de la direction axiale dans la région de raccordement (1.1) et vaut de préférence entre 3 mm et 20 mm, de préférence encore entre 5 mm et 12 mm.

6. Elément tubulaire selon l'une quelconque des revendications précédentes, **caractérisé en ce que** le tube métallique (1) est entouré, en particulier dans toute la région qui n'est pas couverte par le raccord métallique (5) ou par un autre raccord métallique, d'une couche en matière plastique renforcée par des fibres, dans lequel l'épaisseur de la couche se situe de préférence entre 2 mm et 8 mm.

7. Elément tubulaire selon l'une quelconque des revendications précédentes, **caractérisé en ce qu'**il se trouve un câble (4), qui s'étend d'une extrémité du tube à l'autre extrémité du tube et qui est raccordé à un connecteur (6), qui se trouve à l'intérieur du raccord métallique (5) et qui est apte à établir une connexion électrique avec un autre connecteur ou un autre câble dans un autre élément tubulaire, lorsque l'élément tubulaire est vissé à l'autre élément tubulaire au moyen du filet (11) ou de la bride.

8. Elément tubulaire selon la revendication 7, **caractérisé en ce que** la douille intérieure (3) présente un écran de protection (3.3) se raccordant au filet cylindrique (7), qui est réalisé de telle manière que le connecteur (6), considéré en direction radiale, se trouve entièrement entre le raccord métallique (5) et la douille intérieure (3).

9. Elément tubulaire selon l'une des revendications 7 ou 8, **caractérisé en ce que** la douille intérieure (3) présente une rainure axiale (8) dans le filet cylindrique (7) ou un trou longitudinal axial dans la matière en dessous du filet cylindrique (7), par lequel le câble (4) est conduit du tube métallique (1) au connecteur (6).

10. Elément tubulaire selon l'une quelconque des revendications 7 à 9, **caractérisé en ce que** le tube métallique (1) présente dans la région de raccordement (1.1) une rainure axiale, qui est disposée dans le prolongement de la rainure axiale (8) dans le filet cylindrique ou du trou longitudinal axial en dessous du filet cylindrique sur la douille intérieure (3).

11. Elément tubulaire selon l'une quelconque des revendications 7 à 10, **caractérisé en ce que** la face intérieure de la douille intérieure (3) présente un profil intérieur (12) sans arêtes et sans gradins qui s'étend de façon totalement continue en direction axiale.

12. Procédé de fabrication d'un élément tubulaire, qui est configuré selon l'une quelconque des revendications précédentes, **caractérisé en ce que** l'on exécute les étapes suivantes:
a) on monte la douille intérieure (3) dans une extrémité de tube d'abord encore cylindrique du tube métallique (1), de telle manière qu'une région de raccordement (3.1) de forme conique de la douille intérieure se trouve dans le tube métallique (1);
b) on déforme, de préférence on lamine, le tube métallique (1) à cette extrémité de tube, de telle manière qu'il se forme une région de raccordement (1.1) en forme de cône en direction de l'extrémité de tube, qui est en contact avec la région de raccordement conique (3.1) de la douille intérieure;
c) on visse le raccord métallique (5) sur la douille intérieure (3) au moyen du filet cylindrique (7, 9), de telle manière que le tube métallique (1) soit serré à plat entre la douille intérieure (3) et le raccord métallique (5) dans la région de raccordement (1.1).

13. Procédé selon la revendication 12, **caractérisé en ce que** l'on dépose un câble (4) sur le côté extérieur du tube métallique (1) d'une extrémité du tube à l'autre extrémité du tube, **en ce que** l'on pose le câble (4) dans une rainure axiale (10) dans le filet cylindrique (7) ou à travers un trou longitudinal axial dans la matière en dessous du filet cylindrique (7) de la douille intérieure (3), et dans une rainure (10) qui s'y raccorde dans la région de raccordement (1.1) du tube métallique et **en ce que** l'on raccorde le câble (4) à un connecteur (6) avant d'exécuter l'étape c).

14. Procédé selon la revendication 12 ou 13, **caractérisé en ce que** l'on entoure le tube métallique (1) avec une couche de matière plastique renforcée par des fibres (2), de préférence dans toute la région qui n'est pas couverte par le raccord métallique (5) ou par un autre raccord métallique.
